# EUROPÄISCHE PATENTANMELDUNG

(11) **EP 3 165 911 A1**
(43) Veröffentlichungstag der Anmeldung: **10.05.2017**
(21) Anmeldenummer: 15192671.4
(22) Anmeldetag: 03.11.2015
(51) Int. Cl.: G01N 27/38, G01N 27/416

(54) **AUTOMATISIERTE WARTUNG VON ELEKTROCHEMISCHEN SENSOREN**

(71) Anmelder: Bayer Technology Services GmbH, 51368 Leverkusen (DE)
(72) Erfinder: Bäcker, Andreas, 42349 Wuppertal (DE)
(74) Vertreter: BIP Patents

(57) **Zusammenfassung**

Die Anmeldung betrifft eine Lösung zur automatisierten Wartung insbesondere (Neu)-Kalibrierung, Regenerierung und Reinigung von elektrochemischen Sensoren.

## Beschreibung

Die Anmeldung betrifft eine Lösung zur automatisierten Wartung insbesondere (Neu)-Kalibrierung, Regenerierung und Reinigung von elektrochemischen Sensoren.

Elektrochemische Sensoren (auch Elektrode genannt) speziell im Bereich pH, Leitfähigkeit und Redox werden in der Reaktionstechnik in großen Stückzahlen eingesetzt.

pH- elektrochemische Sensoren müssen in unterschiedlichen Intervallen von einigen Stunden bis zu mehreren Wochen kalibriert werden. Die Kalibrierintervalle sind abhängig von der Belastung der Messkette während des Einsatzes. Für die Kalibrierung wird die Messkette umfassend ein oder mehreren Sensoren in eine oder mehrere Referenz-Pufferlösungen mit bekanntem pH-Wert, eingetaucht. Sobald sich ein stabiles Messsignal eingestellt hat, werden Änderungen bzw. Abweichungen von Messkettennullpunkt und -steilheit durch Justage an das Messgerät angepasst, so dass die Messabweichungen nach der Kalibrierung möglichst gering sind (siehe beispielsweise US5511408A, US4852385A, DE10116614C5).

Es ist wichtig, dass sich während der Kalibrierung möglichst schnell ein stabiles Messsignal einstellt, damit einerseits der Wartungsaufwand nicht zu hoch wird und anderseits die stabile Gleichgewichtseinstellung der Messspannungen in den Pufferlösungen eine geringe Messunsicherheit gewährleistet. Bei Labormesseinrichtungen treten normalerweise keine Probleme auf, da die Messketten bei Raumtemperatur unter milden Bedingungen eingesetzt und anschließend gemäß Herstellerempfehlung typischerweise in KCl-Lösungen aufbewahrt werden.

Bei industriellen pH-Messungen werden üblicherweise die pH-Messketten im Dauereinsatz dem Messmedium ausgesetzt. Dabei treten häufig stark belastende Bedingungen wie hohe oder niedrige Temperaturen, pH-Werte oder Leitfähigkeiten, Drücke sowie Druckwechsel auf. Bei der routinemäßigen Kalibrierung von industriellen Messstellen wird häufig ein sehr langsames Einstellverhalten beobachtet. Diese Erscheinung tritt verstärkt auf bei den immer häufiger eingesetzten Messketten mit Gel- oder Polymerelektrolyt. Dadurch kann der Kalibriervorgang sehr lange (mehr als 20 Minuten) dauern,was hohe Wartungskosten verursacht (siehe beispielsweise EP2128606A1). Wenn der Zeitdruck sehr hoch ist, besteht die Gefahr, dass die Kalibrierung zu früh, d. h. vor Erreichen der Gleichgewichtswerte beendet wird. Durch eine solche Justage mit Nicht-Gleichgewichtswerten sind die nachfolgenden Messungen mit teilweise erheblichen Fehlern behaftet und die Messunsicherheit ist höher als vom Betreiber gefordert. Ein frühzeitiger Austausch der Elektrode führt zu unnötigen hohe Kosten.

Darüber hinaus sind elektrochemische Sensoren und deren Elektroden im Algemeinen bedingt durch Einflüsse wie Temperatur, Art und Konzentration der Ionen im Prüfmedium, Verschmutzung sowie

Alterung bezüglich ihrer Messcharakteristik nur bedingt konstant und sollten deshalb je nach Anwendungsfall in entsprechenden zeitlichen Abständen gereinigt und mittels standardisierter Kalibrierlösungen überprüft werden. Bei einer solchen Überprüfung werden Sensorparameter wie Nullpunkt und Steilheit der Sensorkurve messtechnisch erfasst und in der zugehörigen Mess- und Auswerteeinrichtung gespeichert und beim Betrieb des Sensors berücksichtigt (EP2128606A1, US5511408A).

Elektrochemische Sensoren werden oftmals vor Ort an der Rohrleitung kalibriert. Mittels der heute verfügbaren Memosens-Technologie, in der die Messsignale digitalisiert werden und induktiv, also kontaktlos, übertragen werden, ist es heute möglich diese Sensoren zentral zu kalibrieren und nur noch vor Ort auszuwechseln. Alternativ kann die Kalibrierung im Labor unter optimalen Bedingungen und das Einstellen der Kalibrierwerte am Messgerät vor Ort erfolgen. Die elektrochemischen Sensoren können im Labor vorkalibriert und später am Einsatzort ausgetauscht werden, wobei die automatische Übertragung der Daten an das Messgerät erfolgt. Offen ist dabei die Frage, inwieweit sich der elektrochemische Sensor durch den Transport ins Labor, die Zeit der Lagerung und der Behandlung regeneriert und ob nach der Kalibrierung die Sensoreneigenschaften im Betrieb noch denen im Kalibrier-Labor entsprechen (EP2128606A1).

Werden elektrochemische Sensoren im Labor gereinigt und neukalibriert, stellen sich ebenfalls die o. g. Fragen der Zuverlässigkeit. Üblicherweise wird durch Erfahrungswerte über 1 bis 3 Wochen abhängig von der Anwendung sichergestellt, dass ein Sensor stabil bleibt. Um dieses Problem zu lösen sind einige Vorrichtungen zur automatisierten Instandhaltung insbesondere (Neu)-Kalibrierung, Regenerierung und Reinigung von elektrochemischen Sensoren bekannt.

US5511408A beschreibt eine tragbare Vorrichtung zur automatischen Kalibrierung eines elektrochemischen Sensors umfassend eine Sensorkammer zur Ein-/Ausgabe sowie Lagerung des elektrochemischen Sensors mit einem Mittel zur Detektion des elektrochemischen Sensors. Die Sensorkamme ist mit Reservoirs für Waschflüssigkeit und Kalibrierungsflüssigkeit verbunden und ein Transportsystem transportiert die Wasch- oder Kalibrierungsflüssigkeiten in die Sensorkammer. Ein Steuerungsmodul steuert das Transportsystem, das Auslesen des Outputs des elektrochemischen Sensors und koordiniert das Kalibrierungsprozess des elektrochemischen Sensors in der Sensorkammer im Vergleich zu gespeicherten Referenzwerten.

EP1248102A1 beschreibt eine automatisierbare Mess-, Reinigungs- und Kalibriereinrichtung für pH-Elektroden oder Elektroden zur Messung von Redoxpotentialen, insbesondere in der Prozesstechnik, mit einer Elektrodenarmatur, welche die Messelektrode in einer Betriebsposition oder in einer Wartungsposition hält. Die Elektrode ist in der Wartungsposition in einer Spülkanmler aufgenommen, in welcher ein Reinigungs- und ein Kalibrierungsvorgang durchgeführt werden, indem eine Pumpvorrichtung Reinigungsflüssigkeit und Kalibrierlösungen zur Spülkammer über eine Förderleitung zuführt. Eine Steuereinheit setzt Befehle eines Messumformers in pneumatische Signale zur Steuerung der Elektrodenarmatur um. In der Steuereinheit werden ferner Rückmeldungen über die Armaturenposition, also die Position der Elektroden, über den Füllstand in den Kanistern für Reinigungsflüssigkeit und Kalibrierlösungen sowie Überwachungsdaten für Druckluft und Druckwasser verarbeitet. Hingegen werden Messsignale der Messelektrode, die über einen Elektrodenkabel an den Messumformer gegeben werden, dort verarbeitet. Der Messumformer ist die Kommunikationszentrale der Einrichtung; er umfasst einen Prozessrechner oder ist mit einem Prozessrechner und einer Eingabevorrichtung verbunden. Rückmeldungen werden, wie Armaturenposition, Kanisterfüllstand sowie Überwachung von Druckluft und Wasser über diese Schnittstelle an den Prozessrechner gegeben.

US4852385A beschreibt eine Vorrichtung zur Instandhaltung von elektrochemischen Sensoren umfassend ein Transportsystem zum Transport des elektrochemischen Sensors zwischen der Mess- und Inanstandhaltungsstelle, wobei die Vorrichtung Waschflüssigkeits- und Kalibrierungsbäder aufweist, in die der elektrochemische Sensor transportiert und gehalten wird. Ein Steuerungsmodul umfasst Elemente zur Kontrolle des Transports, des Reinigungs- und Kalibrierungsprozesses und Zustellung der Reinigungs- und Kalibrierungsflüssigkeiten.

Unterschiedliche Reinigungs- und Kalibrierintervalle abhängig von der Belastung der Messkette während des Einsatzes im industriellen Prozess werden im Stand der Technik nicht in Betracht gezogen.

In komplexen Applikationen besteht eine besondere Herausforderung darin, diese zentral kalibierten Sensoren und deren Eigenschaften wie z. B. Inbetriebnahmedatum, letzte Instandhaltungs-, wie z. B. Regenerierungs-, Reinigungs-, Kalibrierungsdetails der jeweiligen Messstelle zuzuordnen. Eine solche Zuordnung würde eine statisische Datenauswertung zusätzlich ermöglichen um Instandhaltungszyklen zu optimieren und neuartige standardisierte Reinigungs- und Regenerierungsschritte zu entwickeln.

Es bestand daher die Aufgabe eine Lösung bereit zu stellen, die eine automatische Wartung der jeweiligen Messstelle in Betracht zieht, deren Zuordnung und spezifischen Charakteristiken und die Optimierung der Wartung ermöglicht.

Typischerweise umfasst die Wartung eines elektrochemischen Sensors eine (Neu-)Kalibrierung, optional vor der Kalibrierung eine Reinigung. Ggf. ist vor der Kalibrierung in einer Kalibrierungslösung ein Regenerierungsschritt in einer entsprechenden Lösung hilfreich. Die erfindungsgemäße Lösung sollte möglichst die automatische Durchführung dieser Schritte und deren Optimierung ermöglichen.

Die Aufgabe wurde durch eine Vorrichtung zur automatisierten Durchführung eines Wartungsprozesses für elektrochemische Sensoren gelöst, die folgende Elemente umfasst:
- Ein Ein- und Ausgabefach für elektrochemische Sensoren,
- Module für die Wartung und / oder Einlagerung der elektrochemischen Sensoren, wobei mindestens ein Kalibrierungsmodul mit mindestens einer Kalibrierungslösung vorhanden ist,
- Ein Element für den Transport des elektrochemischen Sensors zwischen dem Ein- und Ausgabefach und den Modulen für die Wartung und / oder Einlagerung der elektrochemischen Sensoren,
- Eine Steuereinheit umfassend folgende Module:
   a) Ein Modul zur Steuerung des Wartungsprozesses, verbunden mit
   b) Einem oder mehreren Modulen zur Speicherung von elektrochemischen Sensoren mit spezifischen Daten und einem Modul zur Messung und Abgleich von Daten, verbunden mit
   c) Einem Modul zur Optimierung der Wartung verbunden mit den Modulen aus a) und b).

Üblicherweise ist die Steuereinheit ein Computer mit einer Nutzeroberfläche zum Input von elektrochemischen Sensoren mit spezifischen Daten und Ausgabe insbesondere des Ergebnisses der Analyse durch das Modul zur Optimierung von Wartung und / oder des Status des Prozesses. Daten können auch automatisch z. B. aus einer Datenbank oder einem verbundenen EDV-System selektiert werden und in das entsprechende Modul der Steuereinheit gespeichert oder übertragen werden.

In einer ersten Ausführungsform der Vorrichtung umfasst das Ein- und Ausgabefach eine Wartungskammer, die eine Wartungslösung wie eine Waschlösung oder eine Kalibrierungslösung mittels Leitungen aus einem entsprechenden Reinigungs- und / oder Kalibrierungsmodul für die Durchführung des entsprechenden Wartungsvorgang aufnimmt, in der der elektrochemische Sensor gehalten wird, wobei die Wartungslösung nach dem Vorgang abgeführt werden kann. Ein solches Ein- und Ausgabefach umfassend eine Wartungskammer wird z. B. in US5511408A oder EP1248102A1 dargestellt. In diesem Fall dient die Wartungskammer als Modul für die Wartung des chemischen Sensors. Bevorzugt umfasst die Steuereinheit ein Modul zur Messung und Steuerung des Kalibrierungsmoduls, der z. B. die Temperatur der Kalibrierungslösungen misst und kontrolliert sowie ggf. den automatischen Ersatz der Kalibrierungslösung ermöglicht. Bevorzugt wird der elektrochemische Sensor am Ende der Wartung in ein Modul zur Einlagerung der elektrochemischen Sensoren transportiert.

In einer weiteren Ausführungsform umfasst die Vorrichtung zur automatisierten Wartung von elektrochemischen Sensoren ein Element zur Aufnahme und Transport der elektrochemischen Sensoren ( auch Transportelement genannt) in das Kalibrierungsmodul, wobei das Kalibrierungsmodul mindestens ein Kalibrierungsbad aufweist, in dem der elektrochemische Sensor während des Kalibrierungsprozesses gehalten wird. In dieser Ausführungsform umfasst die Steuereinheit zusätzlich ein Modul zur Steuerung des Transportelements. Auch in dieser Ausführungsform ist ein Modul zur Messung und Steuerung des Kalibrierungsmoduls in der Steuereinheit vorteilhaft.

Typischerweise ist das Element zur Aufnahme und Transport der elektrochemischen Sensoren ein Roboter mit einer Robotersteuereinheit umfassend eine Ein-/ Ausgangskarte mit analogen und digitalen Anschlüssen. In einer Testvorrichtung wurde ein Roboter und Robotersteuereinheit der Firma Epson verwendet (https://neon.epson-europe.com/de/de/robots/?content=498).

Bevorzugt weist die erfindungsgemäße Vorrichtung außerdem ein Modul zur Einlagerung der elektrochemischen Sensoren (auch Lagerungsmodul genannt) umfassend ein Vorratsbad zur Aufnahme einer Vorratslösung, in dem ein oder mehrere elektrochemische Sensoren zur Lagerung gehalten werden können. In diesem Fall umfasst die Steuereinheit üblicherweise auch ein Modul zur Steuerung des Lagerungsmoduls verbunden mit dem Modul zur Messung und Analyse von Daten.

Bevorzugt weist die erfindungsgemäße Vorrichtung auch ein Modul zur Reinigung des elektrochemischen Sensors auf in dem die elektrochemischen Sensoren zur mechanischen und / oder chemischen Reinigung transportiert und gehalten werden. Die Reinigung wird üblicherweise bei Elektroden, die aus einem Prozess bei einer spezifischen Messstelle entnommen wurden, durchgeführt.

Mechanisch wird der elektrochemische Sensor beispielsweise mittels runden drehenden Bürsten / oder drehenden Elektroden an Bürsten, Schwämmen und oder Spritzduschen gereinigt. Der Reinigungsprozess erfolgt üblicherweise in einem Säuberungsbad, typischerweise in einem Wasserbad oder einem Waschlösungsbad.

Eine typische chemische Reinigung ist eine Reinigung durch Säure (bspw. Salzsäure) oder Laugen, die in einem entsprechenden Waschflüssigkeitsbad stattfindet.

Auch eine Kombination dieser Reinigungsmethoden ist möglich.

Nach dem Reinigungsschritt wird üblicherweise der elektrochemische Sensor noch durch Druckluft frei gepustet.

Umfasst die erfindungsgemäße Vorrichtung ein Reinigungsmodul, so umfasst die Steuereinheit ein Modul zur Steuerung des Reinigungsmoduls.

Typische Daten für die Module zur Speicherung von elektrochemischen Sensoren mit spezifischen Daten (auch Datenmodul genannt) umfassen daher:
- Herstellungsdaten, Einkaufsdaten, Elektrodentyp, Qualitätswerte, Kalibrierungsbereich, Sollwerte, sowie jeweilige Toleranz- bzw. Fehlergrenzen,
- Lagerdaten, wie Lagerdauer und Lagerparameter wie z. B. Lagerlösung, -zeit, -temperatur und -druck,
- Inbetriebnahmedaten, wie Inbetriebnahmedatum, -stelle und Betriebsbedingungen, wie Temperatur und Druck,
- Wartungsdatum und Details der Wartung, wie Reinigungsdaten, wie Reinigungsdatum, Reinigungsprozess und dessen Parameter wie z. B. Reinigungslösung, -zeit, -temperatur, -druck, z. B. Druck zwischen Elektroden und Bürsten sowie maximale Reinigungszeit, Regenerierungsdaten, wie Regenerierungslösung, -zeit, -temperatur, sowie maximale Regenerierungszeit, Kalibrierungsdaten, wie Kalibrierungsdatum, Kalibrierungsprozess und dessen Parameter wie z. B. Kalibrierungslösung, -zeit, -temperatur, -druck, und maximale Kalibrierungszeit,
- Wartungspläne, Elektrodenverbrauch, sowohl aus der Historie als Ergebnis der Analyse durch das Moduls zur Optimierung von Wartung.

Das Modul zur Messung und Analyse von Daten speichert insbesondere die Signale des elektrochemischen Sensors während des Wartungsprozesses und vergleicht sie mit den bisherigen Werten und / oder mit den jeweiligen Fehlergrenzen und Sollwerten, z. B. mit den Kalibrierungswerten aus dem Modul zur Speicherung von elektrochemischen Sensoren mit spezifischen Daten.

Erreichen die Signale über eine vordefinierte maximale Kalibrierungszeit nicht den gespeicherten Kalibrierungsbereich, wird der Kalibrierungsvorgang abgebrochen und der elektrochemische Sensor wird entweder einem Regenerierungsschritt unterzogen oder in einem Abfallcontainer transportiert.

Üblicherweise findet vor der ersten Inbetriebnahme des elektrochemischen Sensors eine erste Kalibrierung statt. Erreichen die Messsignale dann nicht den erwarteten Kalibrierungsbereich, so wird der elektrochemische Sensor vorzugsweise in ein Reklamationsbad transportiert. Diese Funktion ermöglicht eine effektive Ermittlung, Meldung und Rückgabe von Mängelware.

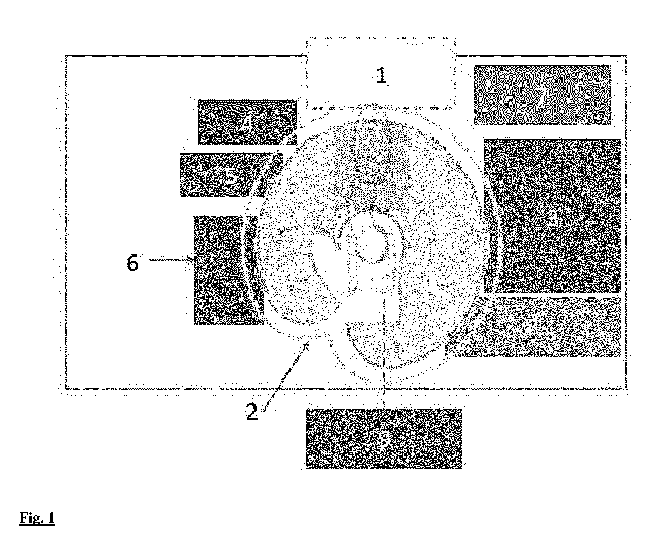

Eine erfindungsgemäße Vorrichtung von oben wird in Fig. 1 exemplarisch dargestellt.

Definition der Bezugszeichen:
1 - Ein-/ Ausgabefach für Elektrode
2 - Roboterzelle zur Aufnahme und Transport der Elektroden
3 - Einlagerungsbad (X Elektroden)
4 - Modul zur mechanischen Reinigung
5 - Säuberungsbad
6 - Kalibrierungsmodul mit Kalibrierungs- / Regenerierungsbäder (übl. 2 Kalibrierlösungen zur Abdeckung des Messbereichs und ein Regenerierungsbad)
7 - Reklamationsbad
8 - Abfallcontainer
9 - Modul zur Steuerung der Roboterzelle = Steuereinheit

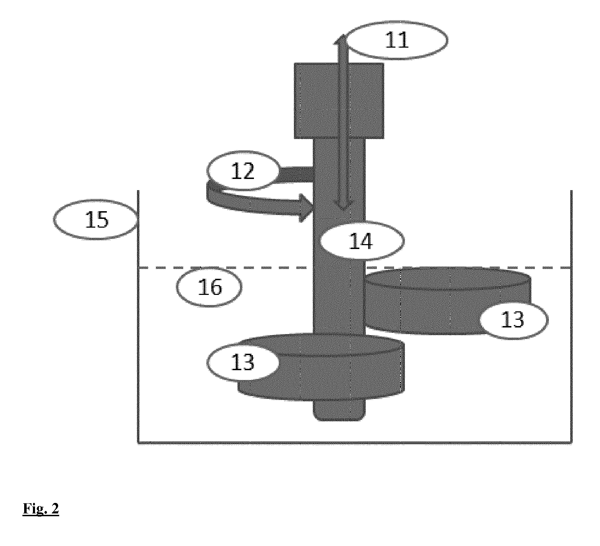

Ein Element zur Aufnahme und Transport der elektrochemischen Sensoren und ein Modul zur mechanischen Reinigung, in dem eine mechanische Reinigung mittels Bürsten verwendet wird, sind in Fig. 2 dargestellt mit folgender Definition der Bezugszeichen:
11 - Z-Achse Roboter
12 - Rotation durch Robotergreifer
13 - Rundbürsten (rotierend)
14 - Elektrode
15 - Reinigungsbecken
16 - Reinigungsflüssigkeit

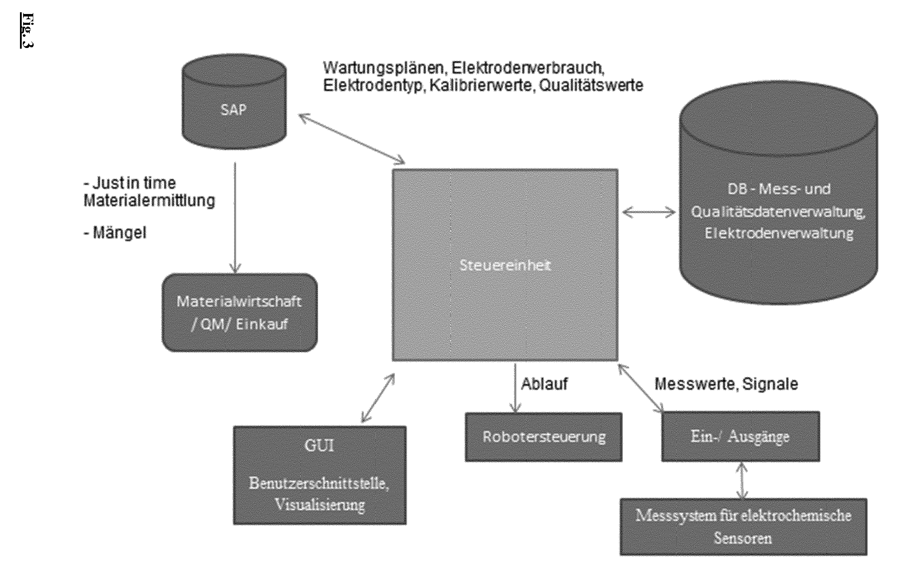

Fig. 3 zeigt exemplarisch die Integration der Steuereinheit in einer EDV-Systemlandschaft.

Die Steuereinheit ist typischerweise für die Durchführung folgender Aufgaben konfiguriert, ohne sich darauf zu begrenzen:
- Steuerung des Wartungsprozesses, insbesondere Steuerung der Roboterzelle zur Aufnahme und Transport der Elektroden, Regenerierung und Säuberung der Elemente der erfindungsgemäßen Vorrichtung wie z. B. Bäder und Bürsten,
- Aufnahme und Auswertung von Messwerten und Wartungsdaten, und Weitergabe dieser Werte an ein Datenbankmodul, und / oder an ein Verwaltungssystem wie z. B. SAP,

Vorzugsweise auch:
- Optimierung der Wartungszyklen mittels eines Optimierungsalgorithmus,
- Ausgabe des Ablaufs und Status des Wartungsprozesses sowie Darstellung der Auswertung der Messwerte zur Visualisierung.

Die Steuereinheit verfügt typischerweise über die für die Erfüllung dieser Aufgaben nötigen Schnittstellen wie z. B. Datenbank- und / oder Benutzerschnittstelle.

Die dargestellten Ausführungsformen sind exemplarisch ohne sich darauf zu begrenzen.

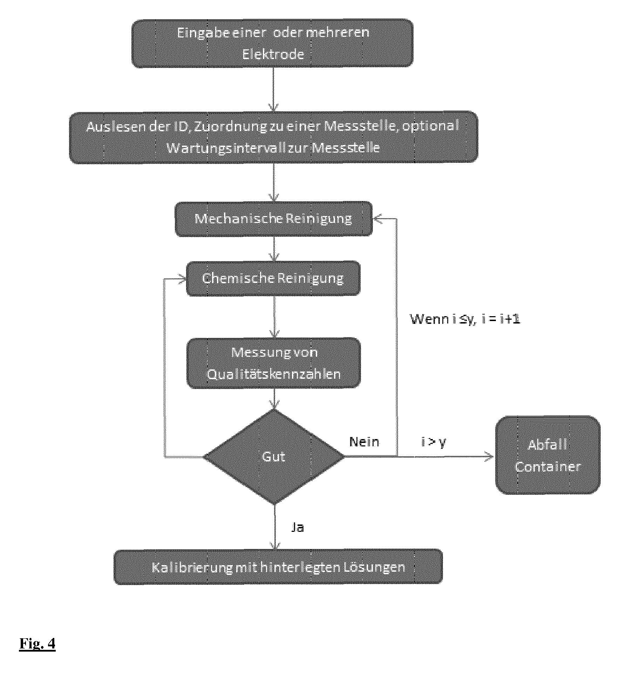

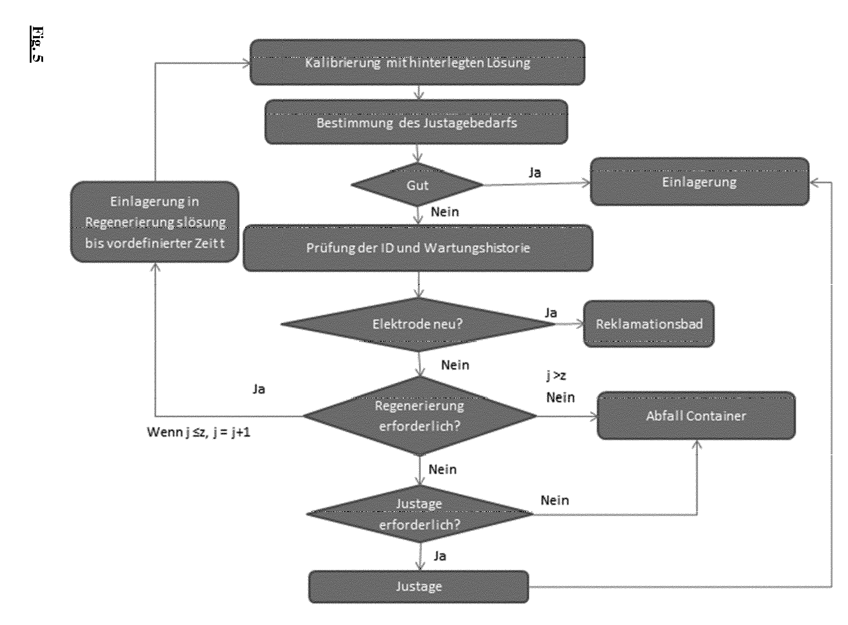

Erfindungsgemäß ist das Modul zur Steuerung des Wartungsprozesses mit einem Algorithmus zur Steuerung des Wartungsprozesses, wie exemplarisch auf Fig. 4 und 5 dargestellt, konfiguriert.

Fig. 4 zeigt einen typischen Ablauf der mechanischen und chemischen Reinigung, wobei i die Anzahl der Reinigungsabläufe und y eine vordefinierte maximale Anzahl von Reinigungsabläufe ist. Typische Reinigungsqualitätsmesswerte sind z. B. eine Glasimpedanzmessung und / oder eine optische Messung des Belags.

Fig. 5 zeigt einen typischen Ablauf des Regenerierungs- / Kalibrierungsschrittes und die Ermittlung der Messstellen bezogenen Regenerierungszeit, wobei j die Anzahl der Kalibrierungsabläufe und z eine vordefinierte maximale Anzahl von Kalibrierungsabläufen ist. Der Justagebedarf ist der Abstand des Messwertes der Elektrode nach Kalibrierung zu der Normalen der Kalibrierungslösung.

Bevorzugt umfasst der Algorithmus zur Steuerung des Wartungsprozesses einen Algorithmus zur Wareneingangskontrolle, wie exemplarisch dargestellt. Hierfür werden typischerweise nach der Kalibrierung die Daten der Elektrode geprüft (ID und Wartungshistorie). Wenn die Elektrode neu ist, und die Kalibrierung nicht in Ordnung ist, wird sie in einem Reklamationsbad gelagert, bis Kontakt mit dem Verkäufer aufgenommen wird.

Bevorzugt bewertet ein Modul zur Optimierung der Wartung die Daten der Module zur Speicherung von elektrochemischen Sensoren mit spezifischen Daten mit dem Ziel die Wartungszyklen über die Zeit, aber auch die Wartungsprozesse und dessen Parametern, auch Wartungspläne genannt, zu optimieren.

Die Optimierung des Wartungsprozesses umfasst typicherweise:
- eine Optimierung der Reinigungs-, und/oder Standzeit (Kalibrierung, Regenerierung) und / oder
- eine Optimierung der maximalen Anzahl der Reinigungs- und/oder Kalibrierungsabläufe.

Für die Optimierung der Reinigungs-, und/oder Standzeit werden die Reinigungs-, Kalibrierungs- und/oder Regenerierungszeiten gemessen und mit jeweils vorgegebenen bzw. hinterlegten Erfahrungswerten aus der Wartungshistorie berechneten Sollwerten für die spezifische Messstelle verglichen.

Für die Optimierung der maximalen Anzahl der Reinigungs- und/oder Kalibrierungsabläufe werden ebenfalls die Anzahl der Abläufe pro Wartung für jede Elektrode abhängig von der Messstelle erfasst und mit jeweils vorgegebenen bzw. hinterlegten Erfahrungswerten aus der Wartungshistorie berechneten Sollwerten für die spezifische Messstelle verglichen.

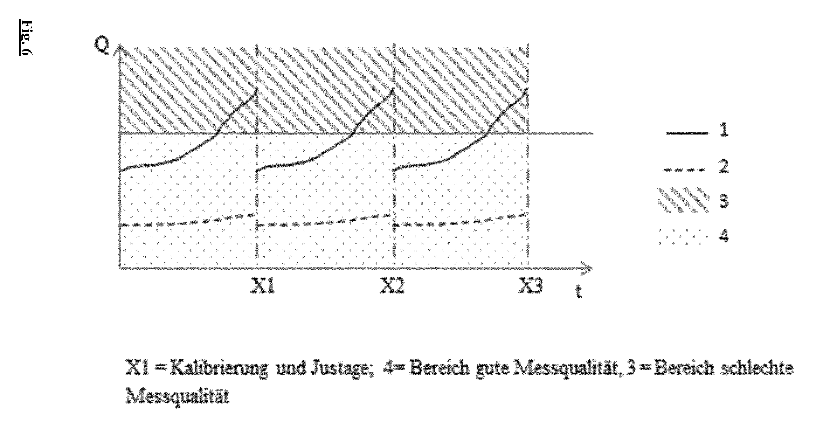

Fig. 6 zeigt eine typische Variation der Messqualität eines elektrochemischen Sensors über die Zeit wie vom Modul zur Optimierung von Wartungszyklen ermittelt (Kurven 1 und 2), wobei zu den Zeitpunkten X1, X2, X3... der elektrochemische Sensor gewartet wurde. Betrachtet man die Kurven, ist zu erkennen, dass bei dem Fall 2 eine Streckung der Wartungszyklen bis zum Ausfall sinnvoll ist und bei Fall 1 eine Verkürzung ratsam wäre.

Für die Optimierung der Wartung umfasst das Modul zur Optimierung der Wartung bevorzugt auch ein Algorythmus zur Optimierung der Wartungszyklen. Für die Optimierung der Wartungszyklen wird der bestimmte Justagebedarf mit dem Justagebedarf der letzten Wartung abgeglichen. Liegt kein Justagebedarf vor, wird die Empfehlung ausgegeben, den Wartungszyklus zu verlängern. Ist der Justagebedarf in einem "niedrig" eingestuften vorgegebenen Grenzbereich, wird die Empehlung ausgegeben, den Wartungsintervall beizubehalten. Ist der Justagebedarf in einem weiteren "groß" eingestuften vorgegebenen Grenzbereich, wird die Empehlung ausgegeben, den Wartungsintervall zu kürzen.

In einer besonderen Ausführungsform ermittelt das Modul zur Optimierung von Wartungszyklen auch den Elektrodenverbrauch für eine Just-In-Time-Materialermittlung.

Weiterer Gegenstand der Anmeldung ist daher ein Verfahren zur automatisierten Durchführung eines Wartungsprozesses für elektrochemische Sensoren in der erfindungsgemäßen Vorrichtung umfassend folgende Schritte:
a) Eingabe eines elektrochemischen Sensors mit einer Identifierungsmarke (ID) in das Ein- / Ausgabefach für Elektroden,
b) Bereitstellung der ID und weiteren Daten des elektrochemischen Sensors sowie deren Messstelle in die Steuereinheit,
c) Steuerung des Transports des elektrochemischen Sensors in eine Kalibrierungslösung gekennzeichnet durch einen normalen Messwert, alternativ Bereitstellung der Kalibrierungslösung in einer Wartungskammer,
d) Kalibrierung und Messung durch den elektrochemischen Sensor in der Kalibrierungslösung,
e) Übertragung der Messung aus d) in die Steuereinheit und Bestimmung des Justagebedarfs durch Vergleich der Messung aus d) mit dem normalen Messwert der Kalibrierungslösung,
f) Abgleich des Justagebedarfs mit einem vordefinierten Fehlergrenzbereich für die Justage,
g) Wenn der Justagebedarf oberhalb des Grenzbereiches für die Justage liegt, Wiederholung von Schritt d) und e) bis zu einer vorbestimmten maximalen Kalibrierungsstandzeit,
h) Speicherung der Kalibrierungsstandzeit und des Justagebedarfs nach Schritt g),
i) Wenn der Justagebedarf nach Schritt f) oberhalb des Fehlergrenzbereiches für die Justage liegt, Transport des elektrochemischen Sensors in ein Abfallcontainer,
j) Wenn der Justagebedarf nach einem der Schritte f) oder g) innerhalb des Fehlergrenzbereiches für die Justage liegt, Durchführung der Justage,
k) Wenn der Justagebedarf unterhalb des Fehlergrenzbereiches für die Justage liegt, Transport des elektrochemischen Sensors in ein Einlagerungsmodul.

In einer besonderen Ausführungsform des Wartungsprozesses wird in einem alternativen Schritt g') eine Regenerierung des elektrochemischen Sensors, in der der elektrochemische Sensor in ein Regenerierungsbad transportiert wird oder eine Regenerierungslösung in die Wartungskammer bereitgestellt wird, und für eine vorbestimmte Regenerierungszeit in dem Regenierungsbad gehalten wird, bevor Schritte c) bis g) wiederholt werden.

In einer besonderen Ausführungsform des Verfahrens wird in einem Zwischenschritt b') der elektrochemische Sensor in ein Reinigungsmodul transportiert, in dem eine chemische und / oder eine chemische Reinigung durchgeführt wird. Bevorzugt wird die Reinigung durch Messung von Reinigungsqualitätsmesswerten, wie z. B. durch eine Glasimpedanzmessung und / oder eine optische Messung des Belags, überwacht. Bevorzugt werden die jeweiligen Reinigungszeiten ermittelt und gespeichert.

In einer besonderen Ausführungsform des Verfahrens werden für die Schritte b'), g) und / oder g') jeweils die Reinigungszeiten, die Kalibrierungsstandzeit und / oder die Regenerierungszeit der früheren Wartung zur Definition der maximalen Zeiten herangezogen.

Bevorzugt werden in einem Schritt l) die gespeicherten Kalibrierungsstandzeiten und der Justagebedarf aus Schritt h) mit der Kalibrierungsstandzeit und des Justagebedarfs der früheren Wartung verglichen und eine Empfehlung zur Anpassung des Wartungszyklus ausgegeben.

Weiterhin bittet die erfindungsgemäße Vorrichtung durch Analyse der Wartungshistorie von elektrochemischen Sensoren einer Messstelle um Unterstützung für die passende Elektrodentypauswahl bzw. -hersteller. So können Informationen zu Standzeit und Kalibrierdaten die Grundlage dafür geben, Typen und Hersteller gezielt pro Messstelle festzulegen und auch Abweichungen zur Vergangenheit (bspw. Qualitätsschwankungen) direkt sichtbar machen.

## Patentansprüche

1. Vorrichtung zur automatisierten Durchführung eines Wartungsprozesses für elektrochemische Sensoren umfassend folgende Elemente:
a. Ein Ein- und Ausgabefach für elektrochemische Sensoren,
b. Module für die Wartung oder Einlagerung der elektrochemischen Sensoren, wobei mindestens ein Kalibrierungsmodul umfassend mindestens eine Kalibrierungslösung vorhanden ist
c. Ein Transportelement für den Transport des elektrochemischen Sensors zwischen dem Ein- und Ausgabefach und den Modulen für die Wartung und / oder Einlagerung der elektrochemischen Sensoren,
d. Eine Steuereinheit umfassend folgende Module:
i. Einem Modul zur Steuerung des Wartungsprozesses, verbunden mit
ii. Ein oder mehrere Module zur Speicherung von elektrochemischen Sensoren mit spezifischen Daten und einem Modul zur Messung und Analyse von Daten, verbunden mit
iii. Einem Modul zur Optimierung der Wartung verbunden mit den Modulen aus a) und / oder b).

2. Verfahren zur automatisierten Durchführung eines Wartungsprozesses für elektrochemische Sensoren in der erfindungsgemäßen Vorrichtung umfassend folgende Schritte:
a. Eingabe eines elektrochemischen Sensors mit einer Identifierungsmarke (ID) in das Ein- / Ausgabefach für Elektroden,
b. Bereitstellung der ID und weiteren Daten des elektrochemischen Sensors sowie deren Messstelle in die Steuereinheit,
c. Steuerung des Transports des elektrochemischen Sensors in eine Kalibrierungslösung **gekennzeichnet durch** einen normalen Messwert, alternativ Bereitstellung der Kalibrierungslösung in einer Wartungskammer,
d. Kalibrierung und Messung **durch** den elektrochemischen Sensor in der Kalibrierungslösung,
e. Übertragung der Messung aus d) in die Steuereinheit und Bestimmung des Justagebedarfs **durch** Vergleich der Messung aus d) mit dem normalen Messwert der Kalibrierungslösung,
f. Abgleich des Justagebedarfs mit einem vordefinierten Fehlergrenzbereich für die Justage,
g. Wenn der Justagebedarf oberhalb des Grenzbereiches für die Justage liegt, Wiederholung von Schritt d) und e) bis zu einer vorbestimmten maximalen Kalibrierungsstandzeit,
h. Speicherung der Kalibrierungsstandzeit und des Justagebedarfs nach Schritt g),
i. Wenn der Justagebedarf nach Schritt f) oberhalb des Fehlergrenzbereiches für die Justage liegt, Transport des elektrochemischen Sensors in ein Abfallcontainer,
j. Wenn der Justagebedarf nach einem der Schritte f) oder g) innerhalb des Fehlergrenzbereiches für die Justage liegt, Durchführung der Justage,
k. Wenn der Justagebedarf unterhalb des Fehlergrenzbereiches für die Justage liegt, Transport des elektrochemischen Sensors in ein Einlagerungsmodul.

3. Verfahren nach Anspruch 2, wobei in einem alternativen Schritt g') eine Regenerierung des elektrochemischen Sensors, in der der elektrochemische Sensor in ein Regenierungsbad transportiert wird oder eine Regenerierungslösung in die Wartungskammer bereitgestellt wird, und für eine vorbestimmte Regenerierungszeit in dem Regenierungsbad gehalten wird, bevor Schritte c) bis g) wiederholt werden.

4. Verfahren nach einem der Ansprüche 2 oder 3, wobei in einem Zwischenschritt b') der elektrochemische Sensor in ein Reinigungsmodul transportiert wird, in dem eine chemische und / oder eine mechanische Reinigung durchgeführt wird.

5. Verfahren nach Anspruch 4, wobei die Reinigung durch Messung von Reinigungsqualitätsmesswerte überwacht wird.

6. Verfahren nach einem der Ansprüche 2 bis 5, wobei für die Schritte b'), g) und / oder g') jeweils die Reinigungszeiten, die Kalibrierungsstandzeit und / oder die Regenerierungszeit der früheren Wartung zur Definition der maximalen Zeiten herangezogen werden.

7. Verfahren nach einem der Ansprüche 2 bis 6, wobei in einem Schritt l) die gespeicherten Kalibrierungsstandzeiten und der Justagebedarf aus Schritt h) mit der Kalibrierungsstandzeit und des Justagebedarfs der früheren Wartung verglichen werden und eine Empfehlung zur Anpassung des Wartungszyklus ausgegeben wird.
